# EUROPEAN PATENT SPECIFICATION

(11) **EP 2 311 007 B1**
(45) Date of publication and mention of the grant of the patent: **28.12.2016**
(21) Application number: 08795142.2
(22) Date of filing: 08.08.2008
(51) Int. Cl.: G06T 7/00, G06T 5/00, H04N 19/86

(54) **METHOD AND APPARATUS FOR BANDING ARTIFACT DETECTION**
VERFAHREN UND VORRICHTUNG ZUR BANDARTEFAKTDETEKTION
PROCÉDÉ ET APPAREIL DE DÉTECTION D'ARTÉFACTS EN BANDE

(43) Date of publication of application: 20.04.2011
(73) Proprietor: Thomson Licensing, 92130 Issy-les-Moulineaux (FR)
(72) Inventor: LI, Zhen, Burbank California 91505 (US); ABBAS, Adeel, Plainsboro New Jersey 08536 (US); LU, Xiaoan, Princeton New Jersey 08540 (US); GOMILA, Christina, Princeton New Jersey 08540 (US)
(74) Representative: Esselin, Sophie
(86) International application number: PCT/US2008/009525
(87) International publication number: WO 2010/016820

(56) References cited:
- WO-A-2008/085425
- WO-A-2008/088482
- WO-A2-2008/085377
- WO-A2-2008/088871
- US-A1- 2008 123 989
- GABBOUJ M ET AL: "AN OVERVIEW OF MEDIAN AND STACK FILTERING" CIRCUITS, SYSTEMS AND SIGNAL PROCESSING, CAMBRIDGE, MS, US, vol. 11, no. 1, 1 January 1992 (1992-01-01), pages 7-45, XP000613176 ISSN: 0278-081X
- ANONYMOUS: 'Feature Detectors - Compass Edge Detector', [Online] 07 June 2008, pages 1 - 9, XP055199079 Retrieved from the Internet: <URL:http://web.archive.org/web/20080607152 236/http://homepages.inf.ed.ac.uk/rbf/HIPR2 /prewitt.htm> [retrieved on 2015-06-30]
- Adrian N Evans: "Nonlinear edge detection in color images" In: "Advances in Nonlinear Signal and Image Processing, EURASIP Book Series on Signal Processing and Communications, Volume 6", 1 January 2006 (2006-01-01), Hindawi Publishing Corporation, http://www.hindawi.com, XP055199087, ISBN: 978-9-77-594537-2 pages 329-355,

## Description

Principles of the present invention relate to processing digital images and video content. More particularly, they relate to detecting banding artifacts in digital images and video content.

### Description of the related art

Non-real time image and video processing applications such as DVD authoring, aim at achieving the best possible visual quality from an image and video processor. To that goal, the processed images or video contents are reviewed to identify pictures with artifacts. This is often a manual and subjective process that requires substantial experience, time and effort affecting the production time and budget. It is also subject to inconsistency due to different visual evaluation standards imposed by different evaluators. In common practice, detected pictures are post-processed or re-encoded with fine-tuned parameters and subject to further review. The post-processing or re-encoding algorithms can tune their parameters based on the artifact strength and locations in order to get better picture quality.

In this context, automatic artifact detection is needed to facilitate the process. In order to automatically identify a problematic scene or segment, it is essential to find objective metrics that detect the presence of visual artifacts. For example, WO 2008/088482 discloses a method and apparatus for automatic visual artifact analysis and quantification. Detection of common artifacts caused by MPEG-2 encoding, such as blockiness, blurriness and "mosquito" noise, has been extensively studied in the past. However, this is a difficult problem not properly handled by conventional and widely-accepted objective metrics such as the Peak Signal-to-Noise-Ratio (PSNR). Furthermore, the use of new compression standards such as MPEG-4 AVC or VC-1 jointly with the fact that the new High Definition DVD formats operate at higher bit-rates has brought into play new types of visual artifacts.

The term banding artifact describes a particular type of visual artifact that appears as a visually continuous band or a false contour in an otherwise smooth transition area. It is generally the result of inadequate bit depth representation caused by bit depth conversion. It may also be introduced by other image/video processors, such as a video compressor. Banding artifact is typically observed in animated contents, but can also be observed in film contents. Bit depth describes the number of bits used to represent the color of a single pixel in a bitmapped image or video frame buffer. This concept is also known as color depth or bits per pixel (bpp), particularly when specified along with the number of bits used. Higher color depth gives a broader range of distinct colors. Bit depth conversion, or color depth conversion, is the process of converting from one bit depth to another, such as from 64 bits to 8 bits per pixel.

To effectively prevent or reduce the banding artifact, a banding artifact detection algorithm needs to provide a strength metric that represents the severity of the artifact such that the re-encoding or post-processing algorithm can automatically identify or prioritize the allocation of resources within the project constraints. Furthermore, a banding artifact detection algorithm needs to provide the strength metric not only on a global level such as a group of pictures or one picture, but also on a local level such as a macroblock or block inside a picture. By locating the banding artifact to the local level, an encoding or processing module can adjust the encoding or processing parameters in the artifact areas only, which can be particularly useful when the overall bit budgets or computational resources are limited.

Consequently, there is a strong need for the ability to automatically detect banding artifacts and determine the strength of the banding artifact per block and per picture.

### SUMMARY

The present invention is defined by the appended claims. In brief, the invention relates to a method for detecting banding artifacts, wherein said method for detecting banding artifacts includes screening candidate banding artifact areas in a digital image based on at least one feature of the areas, filtering the screened candidate banding artifact areas to eliminate artifact areas that are less noticeable to the human eyes, determining a pixel as a banding artifact based on its local or spatial temporal information, and computing a banding artifact strength metric for a set of pixels in the banding artifact areas.

The invention also relates to a video encoder, wherein the video encoder includes a banding artifact detector configured to: 1) screen candidate banding artifact areas of a digital image based on at least one feature of the area; 2) eliminate artifact areas that are less noticeable to the human eyes; 3) identify a pixel as a banding artifact pixel; and 4) calculate a banding artifact strength metric for a set of identified pixels.

The filtering can be performed using a median filter, and the various steps performed by the method and apparatus can be performed on a pixel or transform domain. In addition, the various steps performed by the method and apparatus can be part of a pre-processing step prior to encoding, or can be part of a post-processing step after decoding.

Other aspects and features of the present principles will become apparent from the following detailed description considered in conjunction with the accompanying drawings. It is to be understood, however, that the drawings are designed solely for purposes of illustration and not as a definition of the limits of the present invention, for which reference should be made to the appended claims. It should be further understood that the drawings are not necessarily drawn to scale and that, unless otherwise indicated, they are merely intended to conceptually illustrate the structures and procedures described herein.

### BRIEF DESCRIPTION OF THE DRAWINGS

In the drawings wherein like reference numerals denote similar components throughout the views:
Figure 1 is a flow diagram of the method for detecting banding artifacts according to an implementation of the present principles;
Figures 2 and 3 are a flow diagram of the method for detecting banding artifacts according to an implementation of the present principles;
Figure 4 is a flow diagram of the method for detecting banding artifacts at the pixel level according to an implementation of the present principles;
Figure 5 is a block diagram of a rate control system implementing the methods of the present principles; and
Figure 6 is a block diagram of a predictive encoder implementing the method of the present principles.

### DETAILED DESCRIPTION

The present principles provides a method and apparatus to (i) find the locations of the banding artifacts, (ii) determine the strength of the banding artifact per block, and (iii) determine overall banding artifact strength per picture.

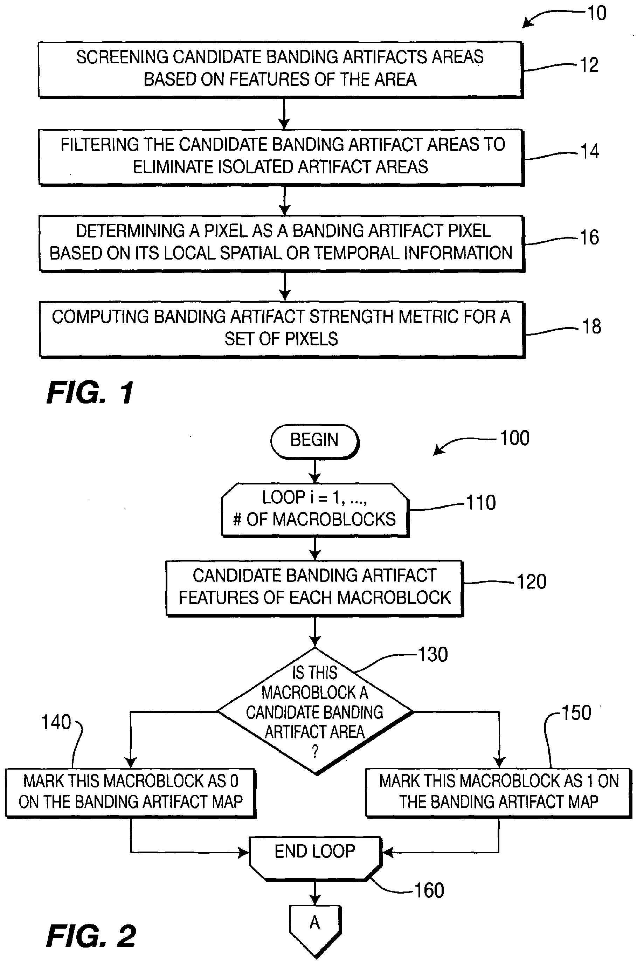

Figure 1 shows a high level flow diagram of the banding artifact detection method 10 according to an implementation of the present principles. In this implementation, the banding artifact detection is done by first screening (12) the targeted picture or pictures and locating the candidate banding artifact areas. The candidate banding artifact areas are then filtered (14) to eliminate the isolated areas. Each pixel in the candidate areas is then subject to a local spatial or temporal context evaluation to reduce false detection. A decision is then made (16) on a pixel level regarding whether a pixel is part of a banding artifact area. The pixel level decision can be further transformed or computed (18) to determine a banding artifact metric that represents the banding artifact strength level for a group of pixels, such as a block, a picture, or a group of pictures. The metric can then be compared against a threshold automatically by the video encoder, or the metric can be presented to a compressionist who will determined the need for re-encoding on an individual case basis.

### Banding artifact area screening

The screening step (12) is used to eliminate the areas where typical banding artifacts are unlikely to occur and hence speed-up the artifact detection. The screening can be done on a pixel level or a group of pixels level. A number of features in the pixel domain or the transform domain can be used to eliminate unlikely candidates. For purposes of this description, an exemplary implementation is shown with a 16 x 16 macroblock level using the following features:
1. The mean of the luminance component of this macroblock in the YUV color space is greater than a pre-determined value;
2. The mean of the R component of this macroblock in the RGB color space is within a pre-determined range;
3. The mean of the B component of this macroblock in the RGB color space is within a pre-determined range;
4. The mean of the G component of this macroblock in the RGB color space is within a pre-determined range;
5. The difference between the mean of U component and the mean of the V components in the YUV color space is greater than a pre-determined value;
6. The variance of the luminance component of the macroblock is within a pre-determined range;
7. Divide the macroblock into four sub-blocks of size 8x8, where the maximum variance of the luminance component in the YUV color space for all four sub-blocks is within a pre-determined range; and
8. Divide the macroblock into four sub-blocks of size 8x8, where the minimum variance of the luminance component in the YUV color space for all four sub-blocks is within a pre-determined range.

In this example, a macroblock that satisfies all the above criteria is classified as a candidate banding artifact area.

### Candidate banding artifact area filtering

Once the candidate banding artifact areas are identified in step 12, a temporal and/or spatial filter (14) can be used on these areas to eliminate the isolated areas. As an exemplary implementation, a spatial median filter can be used to filter out the isolated candidate banding artifact macroblocks inside a video frame. Other filters, such as a temporal median filter, can also be used to eliminate the isolated areas.

### Banding artifact pixel level detection

For each pixel in the remaining candidate banding artifact areas, we further consider its local spatial or temporal context information to reduce false detection (step 16). As an exemplary implementation, a determination that a pixel is a banding artifact pixel is made when at least one of the following conditions are satisfied:
1) The maximum difference between this pixel and its neighboring pixels is within a pre-determined range for all three components in the YUV color space. One example of the neighboring pixels can be every pixel (except the target pixel) in a 5x5 block centered at the targeted pixel; and
2) The total number of candidate banding artifact pixels in the macroblock is within a pre-determined range. One example can be that more than half of the pixels in the macroblock are considered as candidate banding artifact pixels.

### Banding artifact metric for a group of pixels

Based on the pixel level banding artifact detection results, the banding artifact strength can be computed (18) for a group of pixels. One example of such metric can be the percentage of pixels being detected with banding artifact inside a picture.

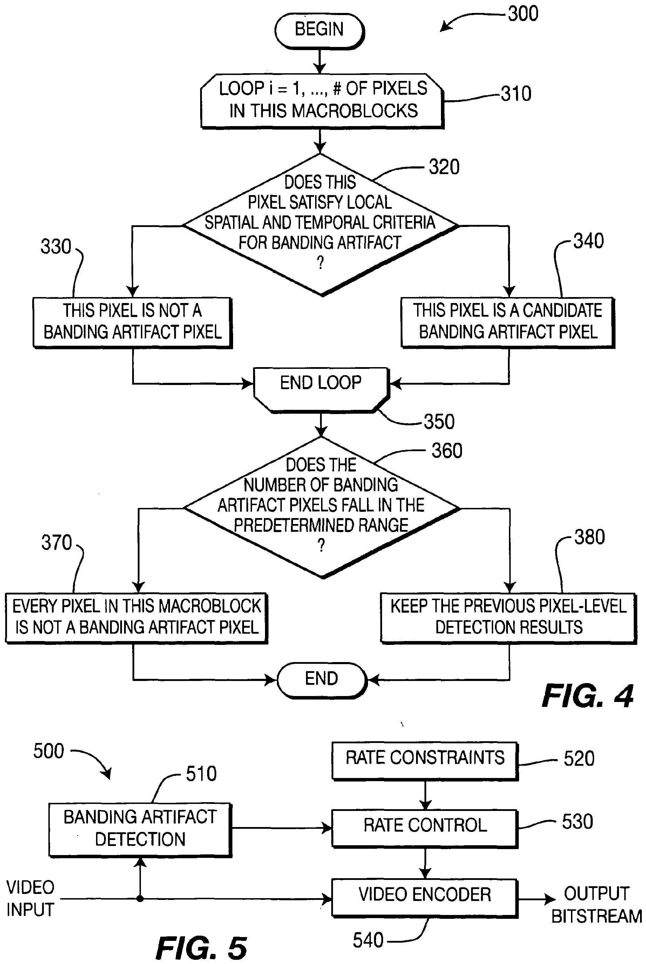

For areas or pictures that are identified with banding artifact strength above a desired threshold, a rate control algorithm 500 can be used to adjust the encoding parameters for re-encoding (See FIG. 5). A simple example of such rate control would be to allocate more bits to areas or pictures with banding artifacts using bits from areas or pictures without banding artifacts. Alternatively, the banding artifact threshold can be presented as an indicator after which an operator can determined whether re-encoding is required and/or the degree of re-encoding required.

FIGs. 2-3 illustrate the block diagram of a banding artifact detection module 100 according to an implementation of the present principles. A mask map is created to indicate whether one macroblock will be a candidate banding artifact macroblock. For each macroblock in a picture (block 110), the banding artifact detection method first screens and eliminates the unlikely artifact candidate areas using different features described above (Block 120). Depending on whether the considered macroblock is a candidate banding artifact area (Block 130), the detected banding artifact candidate is marked as 1 in the mask map (Block 150), otherwise marked as 0 (Block 140). The loop is ended at that point for that group of macroblocks.

The median filtering is done on the artifact mask map to eliminate the isolated areas (Block 170). After the median filtering, each macroblock is cycled through again (loop 180), and a determination is made whether the macroblock has been marked as 1 on the banding artifact map (Block 190). Every pixel outside of the candidate artifact area is classified as non-banding artifact pixel (Block 200), while for pixels inside the candidate artifact area, a pixel level classification that considers the neighborhood information is done to further reduce the false detection (Block 210). The loop then ends (Block 220). Based on the pixel level detection results, banding artifact strength for a group of pixels such as a block or a picture can be formed or calculated (Block 230).

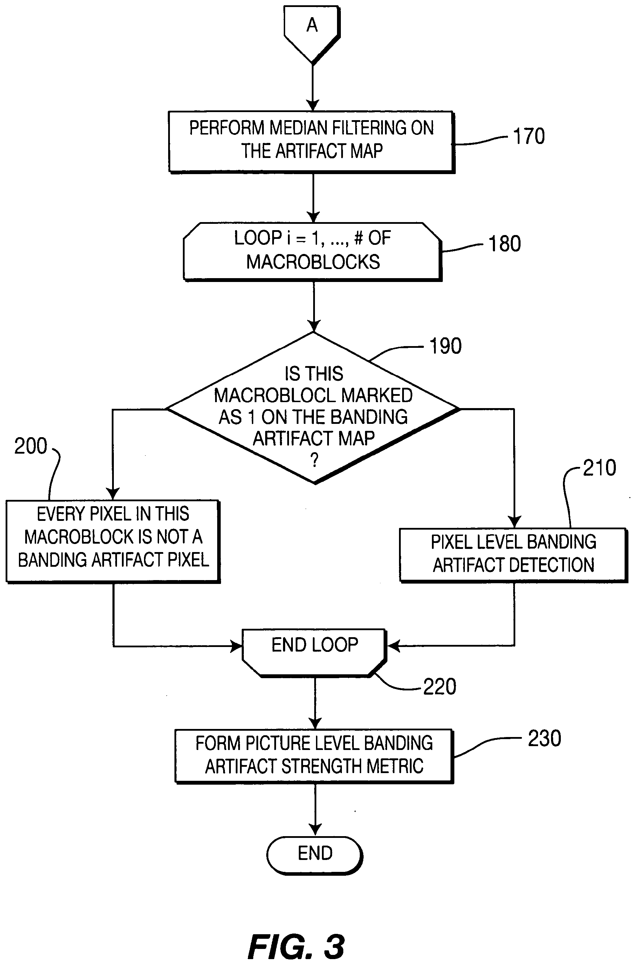

FIG. 4 illustrates the block diagram of a pixel level banding artifact detection module 300 that can be used in FIG. 3 (e.g., for block 210). For every pixel inside the candidate banding artifact area (Block 310), the pixel level banding artifact detection method calculates the temporal and spatial feature based on the neighborhood information to determine if the pixel is a candidate banding artifact pixel (Block 320). The pixels are then identified as either a candidate banding artifact pixel (Block 340), or not a banding artifact pixel (Block 330). The loop then ends (Block 350).

After each pixel in the candidate banding artifact area is classified, the algorithm counts the total number of the candidate banding artifact pixels to determine if the total number of banding artifact pixels fall in the pre-determined range (Block 360). If the total number falls in a pre-determined range, every candidate banding artifact pixels in the area is classified as banding artifact pixel (Block 380). Otherwise, every pixel in the area is classified as non-banding artifact pixel (Block 370).

FIG. 5 illustrates the block diagram of a rate control algorithm 500 that could apply the banding artifact detection method 10 shown and described in Figures 1-3. Turning to FIG. 5, an exemplary apparatus for rate control to which the present principles may be applied is indicated generally by the reference numeral 500. The apparatus 500 is configured to apply banding artifact parameters estimation described herein in accordance with various embodiments of the present principles. The apparatus 500 comprises a banding artifact detector 510, a rate constraint memory 520, a rate controller 530, and a video encoder 540. An output of the banding artifact detector 210 is connected in signal communication with a first input of the rate controller 530. The rate constraint memory 520 is connected in signal communications with a second input of the rate controller 530. An output of the rate controller 530 is connected in signal communication with a first input of the video encoder 540.

An input of the banding artifact detector 510 and a second input of the video encoder 540 are available as inputs of the apparatus 500, for receiving input video and/or image(s). An output of the video encoder 540 is available as an output of the apparatus 500, for outputting a bitstream.

In one exemplary embodiment, the banding artifact detector 510 generates a banding artifact strength metric according to the methods described according to Figs. 1-3 and passes said metric to the rate controller 530. The rate controller 530 uses this banding artifact strength metric along with additional rate constraints stored in the rate constraint memory 520 to generate a rate control parameter for controlling the video encoder 540. Alternatively, the artifact strength metric can be stored in a memory, where said banding artifact strength metric can later be retrieved and a decision can be made when re-encoding is required or not.

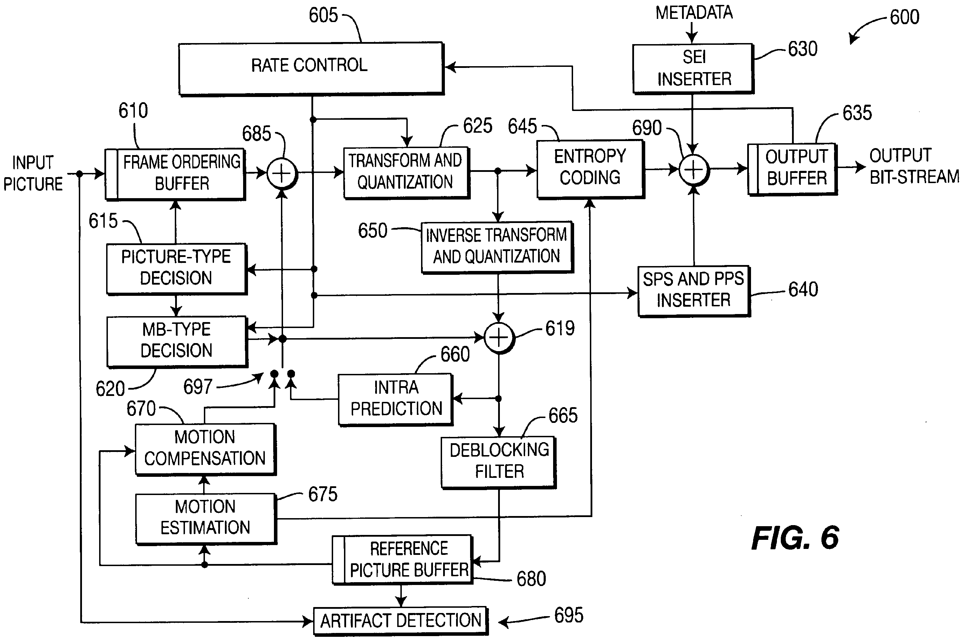

Turning to FIG. 6, an exemplary predictive video encoder to which the present principles may be applied is indicated generally by the reference numeral 600 that could apply the rate control algorithm in FIG. 5 with an integrated banding artifact detection module 695 implementing the banding artifact detection method of the present principles. The encoder 600 may be used, for example, as the encoder 540 in FIG. 5. In such a case, the encoder 600 is configured to apply the rate control (as per the rate controller 530) corresponding to the apparatus 500 of FIG. 5.

The video encoder 600 includes a frame ordering buffer 610 having an output in signal communication with a first input of a combiner 685. An output of the combiner 685 is connected in signal communication with a first input of a transformer and quantizer 625. An output of the transformer and quantizer 625 is connected in signal communication with a first input of an entropy coder 645 and an input of an inverse transformer and inverse quantizer 650. An output of the entropy coder 645 is connected in signal communication with a first input of a combiner 690. An output of the combiner 690 is connected in signal communication with an input of an output buffer 635. A first output of the output buffer is connected in signal communication with an input of the rate controller 605.

An output of a rate controller 605 is connected in signal communication with an input of a picture-type decision module 615, a first input of a macroblock-type (MB-type) decision module 620, a second input of the transformer and quantizer 625, and an input of a Sequence Parameter Set (SPS) and Picture Parameter Set (PPS) inserter 640.

A first output of the picture-type decision module 615 is connected in signal communication with a second input of a frame ordering buffer 610. A second output of the picture-type decision module 615 is connected in signal communication with a second input of a macroblock-type decision module 620.

An output of the Sequence Parameter Set (SPS) and Picture Parameter Set (PPS) inserter 640 is connected in signal communication with a third input of the combiner 690.

An output of the inverse quantizer and inverse transformer 650 is connected in signal communication with a first input of a combiner 627. An output of the combiner 627 is connected in signal communication with an input of an intra prediction module 660 and an input of the deblocking filter 665. An output of the deblocking filter 665 is connected in signal communication with an input of a reference picture buffer 680. An output of the reference picture buffer 680 is connected in signal communication with an input of the motion estimator 675 and a first input of a motion compensator 670. A first output of the motion estimator 675 is connected in signal communication with a second input of the motion compensator 670. A second output of the motion estimator 675 is connected in signal communication with a second input of the entropy coder 645.

An output of the motion compensator 670 is connected in signal communication with a first input of a switch 697. An output of the intra prediction module 660 is connected in signal communication with a second input of the switch 697. An output of the macroblock-type decision module 620 is connected in signal communication with a third input of the switch 697. An output of the switch 697 is connected in signal communication with a second input of the combiner 627.

An input of the frame ordering buffer 610 is available as input of the encoder 600, for receiving an input picture. Moreover, an input of the Supplemental Enhancement Information (SEI) inserter 630 is available as an input of the encoder 600, for receiving metadata. A second output of the output buffer 635 is available as an output of the encoder 600, for outputting a bitstream.

Additionally, the methods may be implemented by instructions being performed by a processor, and such instructions may be stored on a processor-readable medium such as, for example, an integrated circuit, a software carrier or other storage device such as, for example, a hard disk, a compact diskette, a random access memory ("RAM"), or a read-only memory ("ROM") The instructions may form an application program tangibly embodied on a processor-readable medium. As should be clear, a processor may include a processor-readable medium having, for example, instructions for carrying out a process.

As should be evident to one of skill in the art, implementations may also produce a signal formatted to carry information that may be, for example, stored or transmitted. The information may include, for example, instructions for performing a method, or data produced by one of the described implementations. Such a signal may be formatted, for example, as an electromagnetic wave (for example, using a radio frequency portion of spectrum) or as a baseband signal. The formatting may include, for example, encoding a data stream, packetizing the encoded stream, and modulating a carrier with the packetized stream. The information that the signal carries may be, for example, analog or digital information. The signal may be transmitted over a variety of different wired or wireless links, as is known.

A number of implementations have been described. Nevertheless, it will be understood that various modifications may be made as long as they fall within the scope of the following claims.

## Claims

1. A method of detecting compression artifacts in a digital image, the method comprising the steps of :
detecting (12) at least one candidate banding artifact area in said digital image, where a banding artifact comprises a visually continuous band within said digital image, wherein each candidate banding artifact area is detected by satisfying that:
the mean of the luminance component of the area in YUV color space exceeds a first threshold,
the mean of the R component of the area in RGB color space is within a first range,
the mean of the G component of the area in RGB color space is within a second range,
the mean of the B component of the area in RGB color space is within a third range,
the difference between the mean of the U component and the mean of the V component of the area in the YUV color space exceeds a second threshold, and
the variance of the luminance component of the area is within a fourth range; and of determining (16), for each pixel within the candidate banding artifact area, whether the pixel has a banding artifact based on the maximum difference between said pixel and a plurality of neighboring pixels being within a predetermined range for all three components in the YUV color space, and said determining determines a total number of said candidate banding artifact pixels within said area and determines every candidate banding artifact pixel within the area to have said banding artifact when said total number of said candidate banding artifact pixels lies within a predetermined range; and computing (18) a banding artifact strength metric for a set of pixels in said digital image based on a percentage of said pixels which have been determined to have a banding artifact, where said banding artifact strength metric represents the severity of said banding artifact.

2. The method of claim 1, wherein the digital image is one of a series of digital images in digital video content.

3. The method of claim 1, wherein said banding artifact strength metric is compared to a threshold, wherein if said banding artifact strength metric exceeds said threshold, said set of pixels is re-encoded.

4. The method of claim 1, wherein said banding artifact strength metric is provided as a system output.

5. A video encoder comprising:
a detector (10, 610) for detecting compression artifacts in a digital image, said detector being configured to detect (12) at least one candidate banding artifact area from said digital image, where a banding artifact comprises a visually continuous band within said digital image, and wherein the candidate banding artifact area is detected by satisfying that :
the mean of the luminance component of the area in YUV color space exceeds a first threshold,
the mean of the R component of the area in RGB color space is within a first range,
the mean of the G component of the area in RGB color space is within a second range,
the mean of the B component of the area in RGB color space is within a third range,
the difference between the mean of the U component and a mean of a V component of the area in the YUV color space exceeds a second threshold, and
the variance of the luminance component of the area is within a fourth range; and to determine (16), for each pixel within the candidate banding artifact area, whether the pixel has a banding artifact based on the maximum difference between said pixel and a plurality of neighboring pixels being within a predetermined range for all three components in the YUV color space, and said determining determines a total number of said candidate banding artifact pixels within said area and determines every candidate banding artifact pixel in the area to have said banding artifact when said total number of said candidate banding artifact pixels lies within a predetermined range; and to compute (18) a banding artifact strength metric for a set of pixels in said digital image based on a percentage of said pixels which have been determined to have a banding artifact, where said banding artifact strength metric represents the severity of said banding artifact.

6. The video encoder of claim 5, wherein an artifact map is formed corresponding to the candidate artifact area, and wherein said detector further comprises a median filter configured to eliminate the artifact areas that are less noticeable to the human eyes from the artifact map.

7. The video encoder of claim 5, wherein said detector identifies the pixel as having banding artifact based on its local spatial information.

8. The video encoder of claim 5, wherein said detector identifies the pixel as having banding artifact based on its local temporal information.

9. The video encoder of claim 5, wherein the digital image is part of a series of digital images making up video content.

10. The video encoder of claim 6, wherein the median filter is configured to consider neighborhood information relating to an identified artifact area to further reduce false detections.

11. The video encoder of claim 5, wherein said banding artifact strength metric is compared to a threshold, wherein if said banding artifact strength metric exceeds said threshold, said set of pixels in the digital image is re-encoded.

12. The video encoder of claim 5, wherein said banding artifact strength metric is provided as a system output.

## Patentansprüche

1. Verfahren zum Detektieren von Kompressionsartefakten in einem digitalen Bild, wobei das Verfahren die folgenden Schritte umfasst:
Detektieren (12) mindestens eines Kandidaten-Banding-Artefaktbereichs in dem digitalen Bild, wobei ein Banding-Artefakt ein visuell ununterbrochenes Band innerhalb des digitalen Bilds umfasst, wobei jeder Kandidaten-Banding-Artefaktbereich dadurch detektiert wird, dass er Folgendes erfüllt:
der Mittelwert der Farbdichtekomponente des Bereichs in dem YUV-Farbraum übersteigt einen ersten Schwellenwert,
der Mittelwert der R-Komponente des Bereichs in dem RGB-Farbraum liegt innerhalb eines ersten Bereichs,
der Mittelwert der G-Komponente des Bereichs in dem RGB-Farbraum liegt innerhalb eines zweiten Bereichs,
der Mittelwert der B-Komponente des Bereichs in dem RGB-Farbraum liegt innerhalb eines dritten Bereichs,
die Differenz zwischen dem Mittelwert der U-Komponente und dem Mittelwert der V-Komponente des Bereichs in dem YUV-Farbraum übersteigt einen zweiten Schwellenwert, und
die Varianz der Farbdichtekomponente des Bereichs liegt innerhalb eines vierten Bereichs; und
Bestimmen (16) für jedes Pixel innerhalb des Kandidaten-Banding-Artefaktbereichs, ob das Pixel einen Banding-Artefakt aufweist, auf der Grundlage dessen, dass die maximale Differenz zwischen dem Pixel und mehreren Nachbarpixeln für alle drei Komponenten innerhalb eines vorgegebenen Bereichs in dem YUV-Farbraum liegt, und wobei das Bestimmen eine Gesamtanzahl der Kandidaten-Banding-Artefaktpixel innerhalb des Bereichs bestimmt und bestimmt, dass jedes Kandidaten-Banding-Artefaktpixel innerhalb des Bereichs den Banding-Artefakt aufweist, wenn die Gesamtanzahl der Kandidaten-Banding-Artefaktpixel innerhalb eines vorgegebenen Bereichs liegt; und
Berechnen (18) einer Banding-Artefakt-Stärkemetrik für einen Satz von Pixeln in dem digitalen Bild auf der Grundlage eines Prozentsatzes der Pixel, von denen bestimmt worden ist, dass sie einen Banding-Artefakt aufweisen, wobei die Banding-Artefakt-Stärkemetrik die Schwere des Banding-Artefakts repräsentiert.

2. Verfahren nach Anspruch 1, wobei das digitale Bild eines aus einer Reihe digitaler Bilder in digitalem Videoinhalt ist.

3. Verfahren nach Anspruch 1, wobei die Banding-Artefakt-Stärkemetrik mit einem Schwellenwert verglichen wird, wobei der Satz von Pixeln umcodiert wird, falls die Banding-Artefakt-Stärkemetrik den Schwellenwert übersteigt.

4. Verfahren nach Anspruch 1, wobei die Banding-Artefakt-Stärkemetrik als eine Systemausgabe bereitgestellt wird.

5. Videocodierer, der umfasst:
einen Detektor (10, 610) zum Detektieren von Kompressionsartefakten in einem digitalen Bild, wobei der Detektor konfiguriert ist zum:
Detektieren (12) mindestens eines Kandidaten-Banding-Artefaktbereichs aus dem digitalen Bild, wobei ein Banding-Artefakt ein visuell ununterbrochenes Band innerhalb des digitalen Bilds umfasst, und wobei der Kandidaten-Banding-Artefaktbereich dadurch detektiert wird, dass er Folgendes erfüllt:
der Mittelwert der Farbdichtekomponente des Bereichs in dem YUV-Farbraum übersteigt einen ersten Schwellenwert,
der Mittelwert der R-Komponente des Bereichs in dem RGB-Farbraum liegt innerhalb eines ersten Bereichs,
der Mittelwert der G-Komponente des Bereichs in dem RGB-Farbraum liegt innerhalb eines zweiten Bereichs,
der Mittelwert der B-Komponente des Bereichs in dem RGB-Farbraum liegt innerhalb eines dritten Bereichs,
die Differenz zwischen dem Mittelwert der U-Komponente und einem Mittelwert einer V-Komponente des Bereichs in dem YUV-Farbraum übersteigt einen zweiten Schwellenwert, und
die Varianz der Farbdichtekomponente des Bereichs liegt innerhalb eines vierten Bereichs; und
Bestimmen (16) für jedes Pixel innerhalb des Kandidaten-Banding-Artefaktbereichs, ob das Pixel einen Banding-Artefakt aufweist, auf der Grundlage dessen, dass die maximale Differenz zwischen dem Pixel und mehreren Nachbarpixeln für alle drei Komponenten innerhalb eines vorgegebenen Bereichs in dem YUV-Farbraum liegt, und wobei das Bestimmen eine Gesamtanzahl der Kandidaten-Banding-Artefaktpixel innerhalb des Bereichs bestimmt und bestimmt, dass jedes Kandidaten-Banding-Artefaktpixel in dem Bereich den Banding-Artefakt aufweist, wenn die Gesamtanzahl der Kandidaten-Banding-Artefaktpixel innerhalb eines vorgegebenen Bereichs liegt; und
Berechnen (18) einer Banding-Artefakt-Stärkemetrik für einen Satz von Pixeln in dem digitalen Bild auf der Grundlage eines Prozentsatzes der Pixel, von denen bestimmt worden ist, dass sie einen Banding-Artefakt aufweisen, wobei die Banding-Artefakt-Stärkemetrik die Schwere des Banding-Artefakts repräsentiert.

6. Videocodierer nach Anspruch 5, wobei entsprechend dem Kandidaten-Artefaktbereich eine Artefaktkarte gebildet wird und wobei der Detektor ferner ein Medianfilter umfasst, das dafür konfiguriert ist, diejenigen Artefaktbereiche, die für die menschlichen Augen weniger wahrnehmbar sind, aus der Artefaktkarte zu beseitigen.

7. Videocodierer nach Anspruch 5, wobei der Detektor das Pixel auf der Grundlage seiner lokalen räumlichen Informationen als eines identifiziert, das einen Banding-Artefakt aufweist.

8. Videocodierer nach Anspruch 5, wobei der Detektor das Pixel auf der Grundlage seiner lokalen Zeitinformationen als eines identifiziert, das einen Banding-Artefakt aufweist.

9. Videocodierer nach Anspruch 5, wobei das digitale Bild Teil einer Reihe digitaler Bilder ist, die den Videoinhalt ergeben.

10. Videocodierer nach Anspruch 6, wobei das Medianfilter so konfiguriert ist, dass es Nachbarschaftsinformationen berücksichtigt, die sich auf einen identifizierten Artefaktbereich beziehen, um Fehldetektionen weiter zu verringern.

11. Videocodierer nach Anspruch 5, wobei die Banding-Artefakt-Stärkemetrik mit einem Schwellenwert verglichen wird, wobei der Satz von Pixeln in dem digitalen Bild umcodiert wird, falls die Banding-Artefakt-Stärkemetrik den Schwellenwert übersteigt.

12. Videocodierer nach Anspruch 5, wobei die Banding-Artefakt-Stärkemetrik als eine Systemausgabe bereitgestellt wird.

## Revendications

1. Procédé de détection d'artéfacts de compression dans une image numérique, le procédé comprenant les étapes suivantes :
détection (12) d'au moins une zone d'artéfacts en bande candidate dans ladite image numérique, où un artéfact en bande comprend une bande visuellement continue dans ladite image numérique, dans laquelle chaque zone d'artéfacts en bande candidate est détectée lorsque les conditions suivantes sont satisfaites : la moyenne de la composante de luminance de la zone dans un espace de couleurs YUV dépasse un premier seuil,
la moyenne de la composante R de la zone dans un espace de couleurs RGB se trouve dans une première plage,
la moyenne de la composante G de la zone dans un espace de couleurs RGB se trouve dans une deuxième plage,
la moyenne de la composante B de la zone dans un espace de couleurs RGB se trouve dans une troisième plage,
la différence entre la moyenne de la composante U et la moyenne de la composante V de la zone dans l'espace de couleurs YUV dépasse un deuxième seuil, et
la variance de la composante de luminance de la zone se trouve dans une quatrième plage ; et détermination (16), pour chaque pixel de la zone d'artéfacts en bande candidate, de la présence dans le pixel d'un artéfact en bande d'après la différence maximale entre ledit pixel et une pluralité de pixels voisins se trouvant dans une plage prédéterminée pour les trois composantes dans l'espace de couleurs YUV, et ladite détermination détermine un nombre total desdits pixels d'artéfacts en bande candidats dans ladite zone et détermine que chaque pixel d'artéfact en bande candidat de la zone présente ledit artéfact en bande lorsque ledit nombre total desdits pixels d'artéfact en bande candidats se trouve dans une plage prédéterminée ; et
calcul (18) d'une métrique de puissance des artéfacts en bande pour un ensemble de pixels dans ladite image numérique d'après un pourcentage desdits pixels déterminés comme présentant un artéfact en bande, où ladite métrique de puissance des artéfacts représente la gravité dudit artéfact en bande.

2. Procédé selon la revendication 1, dans lequel l'image numérique fait partie d'une série d'images numériques d'un contenu vidéo numérique.

3. Procédé selon la revendication 1, dans lequel ladite métrique de puissance des artéfacts en bande est comparée à un seuil, dans lequel si ladite métrique de puissance des artéfacts en bande dépasse ledit seuil, ledit ensemble de pixels est recodé.

4. Procédé selon la revendication 1, dans lequel ladite métrique de puissance des artéfacts en bande est fournie sous la forme d'une sortie système.

5. Codeur vidéo comprenant :
un détecteur (10, 610) pour détecter les artéfacts de compression dans une image numérique, ledit détecteur étant configuré pour détecter (12) au moins une zone d'artéfacts en bande candidate dans ladite image numérique, où un artéfact en bande comprend une bande visuellement continue dans ladite image numérique, et où la zone d'artéfacts en bande candidate est détectée lorsque les conditions suivantes sont satisfaites :
la moyenne de la composante de luminance de la zone dans un espace de couleurs YUV dépasse un premier seuil,
la moyenne de la composante R de la zone dans un espace de couleurs RGB se trouve dans une première plage,
la moyenne de la composante G de la zone dans un espace de couleurs RGB se trouve dans une deuxième plage,
la moyenne de la composante B de la zone dans un espace de couleurs RGB se trouve dans une troisième plage,
la différence entre la moyenne de la composante U et une moyenne d'une composante V de la zone dans l'espace de couleurs YUV dépasse un deuxième seuil, et
la variance de la composante de luminance de la zone se trouve dans une quatrième plage ; et pour déterminer (16), pour chaque pixel de la zone d'artéfacts en bande candidate, si le pixel présente un artéfact en bande d'après la différence maximale entre ledit pixel et une pluralité de pixels voisins se trouvant dans une plage prédéterminée pour les trois composantes dans l'espace de couleurs YUV,
et ladite détermination détermine un nombre total desdits pixels d'artéfact en bande candidats dans ladite zone et détermine que chaque pixel d'artéfact en bande candidat de la zone présente ledit artéfact en bande lorsque ledit nombre total desdits pixels d'artéfact en bande candidats se trouve dans une plage prédéterminée ; et pour calculer (18) une métrique de puissance des artéfacts en bande pour un ensemble de pixels dans ladite image numérique d'après un pourcentage desdits pixels déterminés comme présentant un artéfact en bande, où ladite métrique de puissance des artéfacts représente la gravité dudit artéfact en bande.

6. Codeur vidéo selon la revendication 5, dans lequel une carte d'artéfacts est formée, correspondant à la zone d'artéfacts candidate, et dans lequel ledit détecteur comprend en outre un filtre médian configuré pour éliminer les zones d'artéfacts les moins visibles par l'oeil humain de la carte d'artéfacts.

7. Codeur vidéo selon la revendication 5, dans lequel ledit détecteur identifie le pixel comme présentant un artéfact en bande d'après ses informations spatiales locales.

8. Codeur vidéo selon la revendication 5, dans lequel ledit détecteur identifie le pixel comme présentant un artéfact en bande d'après ses informations temporelles locales.

9. Codeur vidéo selon la revendication 5, dans lequel l'image numérique fait partie d'une série d'images numériques formant un contenu vidéo.

10. Codeur vidéo selon la revendication 6, dans lequel le filtre médian est configuré pour tenir compte des informations de voisinage liées à une zone d'artéfacts identifiée pour réduire davantage les fausses détections.

11. Codeur vidéo selon la revendication 5, dans lequel ladite métrique de puissance des artéfacts en bande est comparée à un seuil, dans lequel si ladite métrique de puissance des artéfacts en bande dépasse ledit seuil, ledit ensemble de pixels de l'image numérique est recodé.

12. Codeur vidéo selon la revendication 5, dans lequel ladite métrique de puissance des artéfacts en bande est fournie sous la forme d'une sortie système.
